# EUROPEAN PATENT SPECIFICATION

(11) **EP 4 058 171 B1**
(45) Date of publication and mention of the grant of the patent: **21.02.2024**
(21) Application number: 20771848.7
(22) Date of filing: 14.09.2020
(51) Int. Cl.: B01D 24/10, A47J 31/60, C02F 1/00

(54) **FILTRATION SYSTEM WITH A FILTER CARTRIDGE AND A SEAT ELEMENT FOR THE FILTER CARTRIDGE**
FILTRATIONSVORRICHTUNG MIT FILTERKARTUSCHE UND SITZELEMENT FÜR DIE FILTERKARTUSCHE
SYSTEME DE FILTRATION AVEC CARTOUCHE FILTRANTE ET ELEMENT D'ASSISE POUR CARTOUCHE FILTRANTE

(30) Priority: 15.11.2019 DE 102019130871
(43) Date of publication of application: 21.09.2022
(73) Proprietor: BRITA SE, 65232 Taunusstein (DE)
(72) Inventor: JOST, Alexander, 65719 Hofheim (DE)
(86) International application number: PCT/EP2020/075638
(87) International publication number: WO 2021/094014

(56) References cited:
- WO-A1-2010/123344
- WO-A2-2008/017492
- DE-A1- 19 827 623
- DE-A1-102004 049 876
- US-A1- 2009 321 342

## Description

The invention relates to a filtration system, in particular a suction filter system, a filter cartridge, in particular a suction filter cartridge, and a seat element for the filter cartridge.

The filtration system comprises the seat element and the filter cartridge being placeable on the seat element. The filter cartridge comprises a housing that is at least partially filled with one or more filter media. The housing defines a top area and a bottom area and comprises an inlet and an outlet. The inlet and the outlet both are arranged in the bottom area of the housing. The housing also comprises a housing wall, an outer extension wall projecting downwards from the bottom area of the housing and providing a supporting edge, an inner extension wall projecting downwards from the bottom area of the housing and a snap-on rim, which snap-on rim is arranged in the bottom area of the housing and which extends radially inwardly and, inintially, axially downwards from the extension wall, thereby defining a central axis Zc and encircling the outlet. The seat element has a bottom wall and sealing seat defining a central axis Zs The sealing seat protrudes upwards from the bottom wall. The snap-on rim is arranged, upon being pushed over the sealing seat while the central axes Zc and Zs are aligned, to flip over from its initially downwards extending position into an axially upwards extending position, whereby the snap-on rim in the axially upwards extending position interacts with the sealing seat to create a sealing.

Suction filter systems, suction filter cartridges, and seat elements of the generic type are known for example from German patent application DE 10 2004 049 877 A1.

Suction filter cartridges are, for example, used in water vessels of automatic drink dispensers, e.g. for hot drinks. More particularly, they may be used in drink dispensers provided with a suction pump, such as e.g. coffee makers etc. The seat element serves to sealingly receive the suction filter cartridge inserted into it. The seat element, thus being adjusted to the outlet of the filter cartridge, preferably is arranged in a water vessel of such device. The seat element thereby may be formed as a separate component or as an integral part of the water vessel. This seat element has an outlet opening through which the filtered water can flow out of the water vessel. The outlet opening of the water vessel is connected to the suction pump of the device. The water to be filtered thus is suc-tioned out of the water vessel, passes the filter medium or filter media in the filter cartridge and reaches the outlet in a filtered state.

Locations such as "up", "upper", "bottom" and "lower" as well as directions, such as "upwards" and "downwards" as used herein relate to the direction of gravity since the cartridge of the generic type is typically mounted in a vertical orientation on the seat element in order to avoid dead water areas in the vessel. Nevertheless, the cartridge may also be mountable in another orientation while the terms are used in same manner in order to consistently describe the geometry of the cartridge. "Axially downwards" means oriented in axial direction whereby the axis to which reference is made is oriented along the direction of gravity, assuming that the cartridge is mounted in a vertical orientation on the seat element. The directions "radially inwardly" and "radially outwardly" relate to defined axes. Thus the snap-on rim extending radially inwardly and axially downwards from the housing wall means that, beginning at the housing wall, its orientation has a first component pointing radially inwardly towards the central axis Zs and a second component pointing axially downwards along the central axis Zs.

Due to the fact that the suction filter cartridge is arranged inside the water vessel of the device the filter cartridge tends to float when the water vessel is filled. In order to prevent floating and thus a separation of the filter cartridge from the seat element of the water vessel the inventors in DE 10 2004 049 877 A1 suggested to arrange said snap-on rim in the bottom area of the filter cartridge encircling the outlet. The snap-on rim points radially inwardly, and, inintially, axially downwards from the inner extension wall towards the central axis Zc. Upon being pushed over the sealing seat, the snap-on rim is configured to flip over from that initial lower snap position into an upper snap position where it points axially upwards.

For this purpose the corresponding seat element is known to comprise said sealing seat in the form of a circular connecting sleeve engaging the outlet of the filter cartridge. The sleeve comprises on its outer face a circumferential shoulder which supports the snap-on rim to move from its lower snap position into the upper snap position. In the upper snap position the snap-on rim contacts the sealing seat in a sealing and clamping manner.

When the vessel is equipped with the filter cartridge, the filter cartridge with the snap-on rim situated in the lower snap position is placed onto the seat element from the top and pressed downward until the snap-on rim turns upwards and hereby engages the sealing seat as described above. The turn-over signals to the operator that the filter cartridge has taken its predetermined sealing position. In that position the supporting edge of the outer extension wall rests on the bottom wall of the seat element and in particular on so called spacer elements positioned on the bottom wall.

However, this measure does not fully prevent a faulty positioning by the operator. The vessel, depending on its form and size, may provide only little space for insertion of the cartridge. In some cases, if the cartridge is slightly tilt during insertion due to the little space it may jam in the vessel without being tightly connected to the seat. As the cartridge, however, was inserted against some resistance and as it does not float when the water vessel is filled the operator might believe that the cartridge is properly inserted, but that is not the case. Other relevant prior art documents are DE 10 2004 049876 A1, WO 2010/123344 A1, WO 2008/017492 A2 and US 2009/321342 A1.

The object of the invention is to provide a filtrations system, a filter cartridge and a seat element which helps to avoid incorrect handling and which ensures a reliable seal between the filter cartridge and the seat element of the water vessel.

The object is achieved by a filtration system, particularly a suction filter system, as described above in which the filter cartridge and the seat element each comprise one of a pairing of positioning elements, the positioning elements being arranged, upon being brought into contact with each other, to allow the snap-on rim to be pushed over the sealing seat only in a number n of defined rotational orientations, with respect to the central axis Zc, of the filter cartridge relative to the seat element.

Preferably the one of said pairing of positioning elements being assigned to the filter cartridge is complementary to the one of said pairing of positioning elements being assigned to the seat element.

A defined rotational positioning helps to control the step of insertion and provides a better feedback to the operator. When the cartridge is not in one of the defined rotational orientations the snap-on rim can not be pushed over the sealing seat without twisting. In other words, the cartridge upon being pushed downwards, depending on the geometry of the positioning elements, will either be caused to twist or it will not move at all. In the first case the cartridge will twist until it reaches its deepest position with respect to the seat element with the snap-on rim being pushed over the sealing seat and being turned upwards. In the second case the cartridge will have to be twisted manually. In both cases the operator receives a haptic feedback in addition to the turn-over of the snap-on rim which signals that the filter cartridge has taken its predetermined sealing position.

Preferably the outlet of the filter cartridge is provided with the inner extension wall being cylindrical and axially alligned with the central axis Zc, herein also referred to as outlet sleeve, with the snap-on rim being linked to lower end thereof. The snap-on rim preferably is linked to the outlet sleeve via a film link. The snap-on rim is preferably a flat ring shaped edge strip extending radially inward. The snap-on rim advantageously comprises an elastic plastic.

The snap-on rim as described above settles in two stable positions, namely its axially downwards extending position (lower snap position) and its axially upwards extending position (upper snap position). In between these definite positions, the snap-on rim is in an unstable state, from which based on its tension it automatically turns into one or the other definite position. Accordingly, the snap-on rim can be flipped over from this upper snap position back into the initial lower snap position when the filter cartridge is pulled upwards out of the seat in order to be removed from the vessel.

In a preferred embodiment the filter cartridge inside the housing comprises at least one up-current chamber and at least one down-current chamber, the up-current chamber and the down-current chamber reaching from the bottom area to the top area and being connected to each other in the top area, the up-current chamber being connected to the inlet, the down-current chamber being connected to the outlet. Both the up-current chamber as well as the down-current chamber may be provided with at least one filter means. It has shown advantageous for the up-current chamber to be provided with an fluidised bed and the down-current chamber with a packed bed. The fluidised bed in the up-current chamber causes only a slight loss of pressure.

Preferably the one of said pairing of positioning elements being assigned to the filter cartridge comprises a number of n recesses at the lower end of the outer extension wall.

Preferably, the outer extension wall projecting from the bottom area is a cylindrical wall, herein also referred to as circular skirt, axially alligned with the central axis Zc and, thus, coaxially surrounding the cylindrical outlet sleeve.

Correspondingly, the one of said pairing of positioning elements being assigned to the seat element comprises a number of n lugs protruding upwards from the bottom wall.

More preferably, the lugs are arranged along a circle around the central axis Zs and the recesses are arranged along a circle around the central axis Zc, both circles having the same radius.

The sealing seat is preferably formed as a circular connecting sleeve which is coaxially surrounded by the socket.

According to a particularly preferred embodiment, the seat element comprises a circular socket wall protruding upwards from the bottom wall in axial allignment with the central axis Zs and, thus, coaxially surrounding the sealing seat. The lugs are then preferably arranged along an inner surface of the socket wall. According to this embodiment, when the filter cartridge is correctly placed onto the seat element, the circular skirt rests against the inner surface of the socket wall while the lugs project into the recesses and the supporting edge of the skirt rests on the bottom wall or, if present, on spacer elements of the seat element.

Preferably the lugs and the recesses, in circumferential direction, have the same length I and, in the direction of the axes Zc and Zs, they have the same height h. That causes the lugs fitting precisely into the recesses which always ensures identical rotational positions independent of the direction in which the filter cartridge has been twisted during assembly.

According to another preferred embodiment the lugs and/or the recesses, in circumferential direction, have inclined endfaces.

Inclined endfaces cause the cartridge to continuously slide down into its deepest position with respect to the seat element when it is manually twisted or it will even cause the cartridge to rotate automatically when it is pushed axially downwards.

The lugs preferably have an essentially isosceles trapezoidal or triangular shape with the apex (vertex opposite the base) pointing upwards, i.e. the base being connected to the bottom wall or, if present, to the spacer elements.

Correspondingly, the recesses preferably also have an essentially isosceles trapezoidal or triangular shape with the apex pointing upwards.

This geometry ensures that the filter cartridge upon being pushed downwards will be caused to twist in the one or other direction dependent on the position it has been initially placed on the seat element.

The number n of lugs and recesses preferably is in the range of 1 to 12, in particular between 1 and 4.

The object is also achieved by a filter cartridge, in particular a suction filter cartridge, placeable on a corresponding seat element comprising a sealing seat, the filter cartridge comprising filter means and a housing defining a top area and a bottom area, the housing comprising an inlet and an outlet, the inlet and the outlet both being arranged in the bottom area, the housing further comprising a housing wall, an outer extension wall projecting downwards from the bottom area of the housing and providing a supporting edge, an inner extension wall projecting downwards from the bottom area of the housing and a snap-on rim being arranged in the bottom area and extending radially inwardly and, inintially, axially downwards from the extension wall, thereby defining a central axis Zc and encircling the outlet. The snap-on rim is arranged to flip over from its initially axially downwards extending position into an axially upwards extending position. The filter cartridge comprises a positioning element being arranged, upon being brought into contact with a corresponding positioning element of the seat element, to allow the snap-on rim to be pushed over the sealing seat only in a number of n defined rotational orientations, with respect to the central axis Zc, of the filter cartridge relative to the seat element. The filter cartridge preferably comprises a positioning element comprising a number of n recesses at the lower end of the outer extension wall.

The object is also achieved by a seat element adapted to receive a filter cartridge, in particular a suction filter cartridge, as described above, the seat element comprising a bottom wall and a sealing seat defining a central axis Zs, the sealing seat protruding upwards from the bottom wall. The seat element comprises a positioning element, the positioning element being arranged, upon being brought into contact with a corresponding positioning element of the filter cartridge, to allow the snap-on rim to be pushed over the sealing seat only in a number of n defined rotational orientations, with respect to the central axis Zc, of the filter cartridge relative to the seat element. The seat element particularly comprises a number of n lugs protruding upwards from the bottom wall.

In the following, exemplary embodiments of the invention are explained in greater detail using the drawings. It is shown in:
- Fig. 1: a perspective view of a seat element according to a first embodi-ment;
- Fig. 2: a vertical cross-section along the line A-A through the seat element of Fig. 1;
- Fig. 3: a vertical cross-section along the line B-B through the seat element of Fig. 1;
- Fig. 4: a vertical cross-section through a seat element according to a second embodiment;
- Fig. 5: a perspective view of a filter cartridge;
- Fig. 6: a vertical cross-section through the filter cartridge of Fig. 5 ar-ranged on the seat element of figure 2; and
- Fig. 7: an enlarged cross-section of the lower area of the filter cartridge and the seat element according to figure 6.

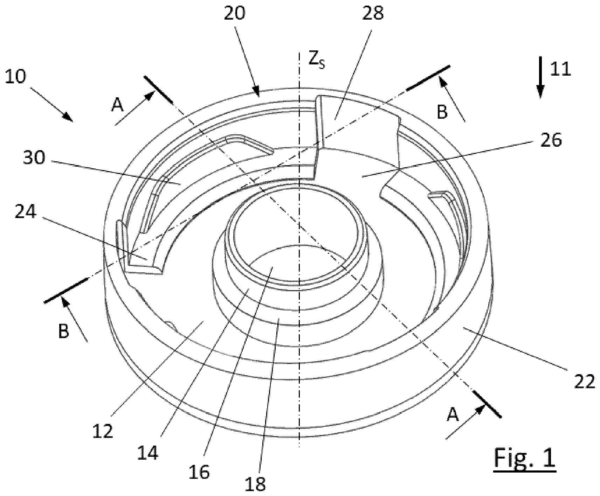

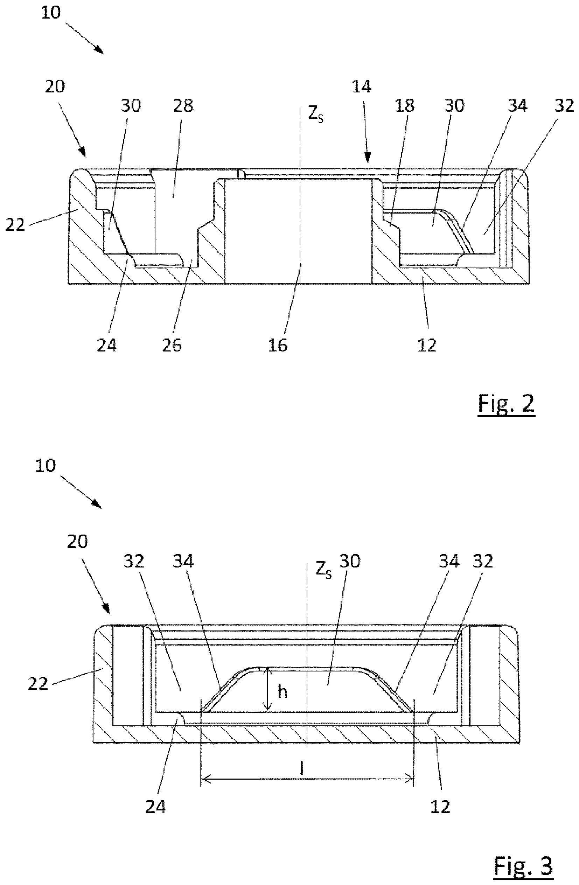

In Fig. 1 a seat element 10 is shown in a perspective view. The same seat element 10 is shown in Fig. 2 in a cross-section along the vertical plane indicated in Fig. 1 by line A-A and further in Fig. 3 in a cross-section along the vertical plane indicated in Fig. 1 by line B-B. The vertical orientation is indicated by a central axis Zs of the seat element 10 whereby the direction "downwards, i.e. the direction of gravity, is indicated by arrow 11.

The seat element 10 comprises a bottom wall 12 and a sealing seat 14 having a circular ring base and having the form of a sleeve protruding upwards from the bottom wall 12. The sealing seat 14 encircles an outlet opening 16 of the seat element 10 through which the filtered water flows out of a vessel (not shown). With its outer diameter being reduced from bottom to top the sealing seat 14 forms a circumferential step or shoulder 18 on its outer face, the shoulder 18 being inclined. This can be achieved either by a decreasing wall thickness of the sealing seat from bottom to top (as shown here) or by an increasing diameter of the outlet opening from top to the bottom (not shown).

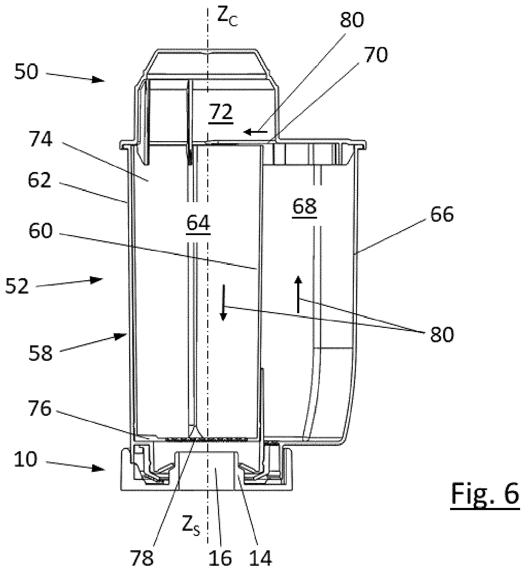

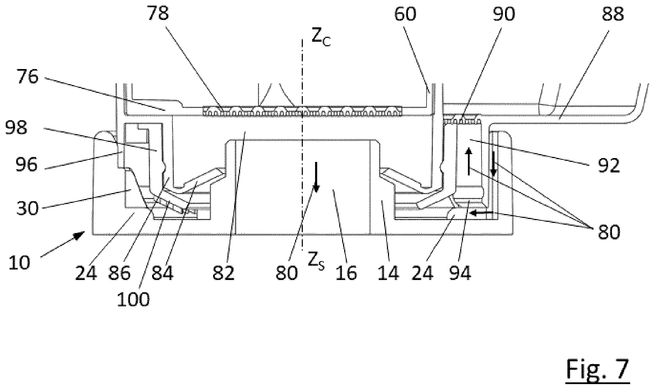

The seat element 10 further comprises a socket 20 also having a circular ring shaped socket wall 22 protruding upwards from the bottom wall 12. The socket wall 22 thereby coaxially surrounds the sealing seat 14. On the inner side of the socket wall 22 attached to the bottom wall 12 the socket 20 comprises spacer elements 24 protruding upwards from the bottom wall 12. In this embodiment three spacer elements are provided at angular distances of 120°. Between each pair of successive spacer elements 24 a gap 26 is formed at the level of the upper surface of the bottom wall 12. In angular alignment with the gaps 26 the inner surface of the socket wall 22 comprises three notches 28. The notches together with the gaps 26 form channels for unfiltrated water as will be explained in more detail with reference to figures 6 and 7.

Further attached to the inner side of the socket wall 22 and in angular alignment with the spacer elements 24 the socket 20 comprises positioning elements 30 in the form of lugs 32. The lugs 32 are shorter in the circumferential direction than the spacer elements 24 so that between each pair of successive lugs 32 in the circumferential direction there are formed recesses being wider in the circumferential direction than the gaps 26. The lugs 32 forming the positioning element of the seat element 10 are arranged along a circle around the central axis Zs and coaxially aligned with the sealing seat 14. As can be seen best in figure 3, the lugs 32, apart from the curvature, have the form of an isosceles or symmetrical trapezoid with inclined endfaces 34. The lugs 32 are arranged along an inner surface of the socket wall 22 and formed as integral parts of the socket wall 22, see figures 1 and 2.

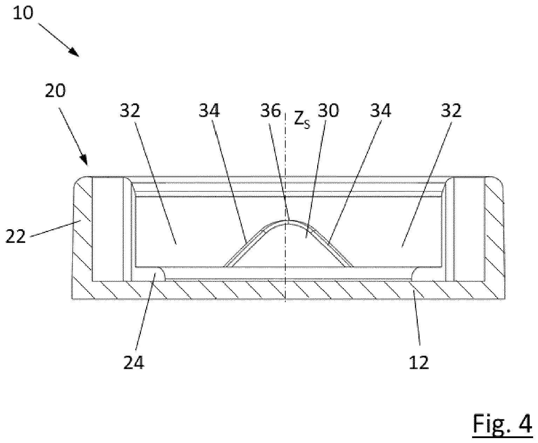

In figure 4 the same vertical cross-section through an alternative embodiment of the seat element 10 is shown. This embodiment differs from the embodiment according to figures 1 to 3 in that the lugs 32 have an isosceles triangular shape with the apex 36 pointing upwards.

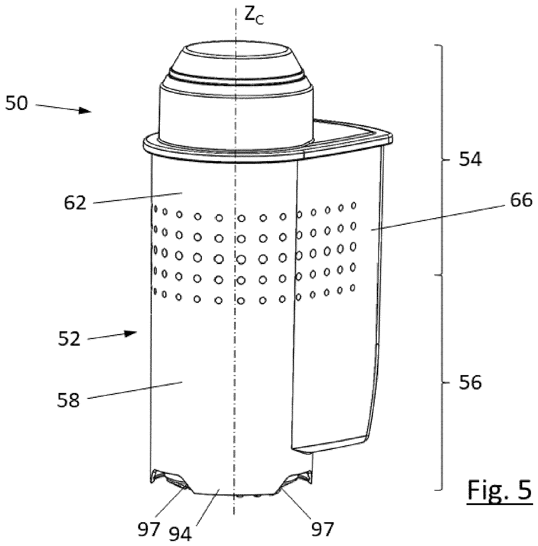

In figure 5 a filter cartridge 50 is shown in a perspective view. The same filter cartridge 50 is shown in Fig. 6 in a vertical cross-section through the center thereof, the filter cartridge 50 being placed on the seat element 10 as shown in figure 2. An enlarged cross-section of the connection between the filter cartridge 50 and the seat element 10 is shown in figure 7.

The filter cartridge 50 comprises a housing 52 defining a top area 54 and a bottom area 56. The housing has an outer housing wall 58 while its interior is dived by a separating wall 60 into a central housing part 62 which encases a down-current chamber 64 and a lateral housing part 66 which encases an up-current chamber 68. The off-set arrangement of the lateral housing part 66 serves the purpose that the up-current and down-current chambers can be embodied with a large volume at a narrow width of the water vessel. Both chambers 64 and 68 are connected via an opening 70 and a connecting chamber 72 arranged in the top area 54 of the housing 52.

In the embodiment shown here, the separating wall 60 is a part of the circumferential wall of a down-current insert 74, which is additionally provided with a bottom wall 76 with a centrally arranged floor grid 78. Underneath the bottom wall 76, the housing 52 of the filter cartridge 50 comprises an outlet area 82 through which filtered water exits the down-current chamber 64. Further in the bottom area 56, encircling the outlet area 82 and defining a central axis Zc the housing 52 comprises a snap-on rim 84. The snap-on rim 84 extends radially inwardly from a cylindrical inner extension wall 86 of the housing wall 58, herein also referred to as outlet sleeve 86. The snap-on rim 84 is linked to the outlet sleeve 86 via a film link. Like the snap-on rim 84, the outlet sleeve 86 is aligned with the central axis Z_{C} and surrounds the outlet 82.

The lateral housing part 66 is also provided with a bottom wall 88 which has a floor grid 90 arranged next to the separation wall 60. Underneath the bottom wall 88 and partially also underneath the bottom wall 76, the housing 52 comprises an inlet area 92 in the form of a ring-shaped channel which is open towards the bottom and through which unfiltered water can enter the up-current chamber 68.

The filter cartridge 50 in the bottom area 56 comprises a cylindrical outer extension wall or skirt 93 projecting downwards from the bottom area 56 of the housing 52. The extension wall 93 provides a supporting edge 94 at the lowest position thereof. A positioning element 95 in the form of 3 recesses 96 is arranged at the lower end of the outer extension wall 93. The recesses 96 are arranged at angular distances of 120° and, thus, in angular alignment with the lugs 32 of the socket 20. The recesses 96 interrupt the lower end of the outer extension wall 93 thereby dividing the supporting edge 94 into three equidistant sections thereby ensuring e safe stand. The recesses 96 in circumferential direction, provide inclined endfaces 97. The skirt 93 and the recesses 96 are arranged around the central axis Zc of the filter cartridge 50 and, thus, are co-axially aligned with the outlet sleeve 86 surrounding the outlet 82. The ring-shaped channel forming the inlet area 92 is confined on one side by the skirt 93 and on the other side by the outlet sleeve 86.

The housing contains filter means (not shown). In particular, the down-current chamber 64 and/or the up-current chamber 68 and/or the connecting chamber 72 are filled with different or the same filter material, such as activated carbon and/or ion exchange material and/or non-woven fabric and/or hollow fibres arrays. Depending on the intended use of the filter cartridge and on the water to be treated one of these materials may sufficient or two or more of these material may be combined. According to a particularly advantageous embodiment, the down-current chamber 64 may be filled with a packed bed made from a filter material. The up-current chamber 68 may comprise a fluidized bed made from a filter material.

The seat element 10, providing the outlet opening 16 of the water vessel (not shown), may either be a separate part of the water vessel or an integral component of the water vessel. The suction pump (not shown either) is connected to the outlet opening 16. With the filter cartridge 50 being placed on the seat element 10 as shown in figures 6 and 7, operation may start in that water is suc-tioned out of the water vessel into the suction filter cartridge 50 and removed through the outlet opening 16. The flow direction of the water from the water vessel into the seat element 10, from there into, inside and out of the filter cartridge 50 into the outlet 16 is symbolized in Figures 6 and 7 by arrows 80.

Before placing the filter cartridge 50 onto the seat element 10, i.e. in its initial state, the snap-on rim 84 extends axially downwards from the housing wall 58 and more particular from the outlet sleeve 86. Upon placing the filter cartridge 50 onto the seat element 10 while pushing the snap-on rim 84 over the sealing seat 14, the snap-on rim 84 gets into contact with the shoulder 18. Upon further pushing it downwards the snap-on rim 84 turns upward into its axially upwards extending position where it interacts with the sealing seat 14 to create a sealing. In this position the cartridge 50 is fixed to the seat element 10 due to a clamping force exerted by the snap-on rim 84 on the sealing seat 14. For that purpose the exterior diameter of the sleeve 14 at its section above the shoulder is slightly larger than the interior diameter of the snap-on rim 22 in its upper snap position. Therefore, when the water vessel is filled the filter cartridge 50 cannot float.

The outlet sleeve 86 may be provided with openings (not shown), connecting the inlet area 92 with the outlet area 82. At the exterior wall of the outlet sleeve 21 a circular stabilizer ring 98 is arranged having a cylindrical section and, at the lower end thereof, a collar 100 which is inclined radially inwardly. In the cylindrical section another openings (not shown) may be arranged, which can be aligned to the openings in the outlet sleeve 86 by rotating the stabilizer ring 98 relative to the outlet sleeve 86. The aligned openings together, thus, form adjustable bypass openings. The adjustable bypass is preferably sized such that not the entire crude water immediately flows from the inlet into the outlet. Preferably the bypass is designed such that no more than 50% of the crude water can be diverted to the outlet.

In addition, in case of failing clamping forces of the snap-on rim 84 in its upper snap position, it is advantageous for the outlet sleeve 86 to be supported by the stabilizer ring 98. Furthermore, the collar 100 protruding into the outlet helps to define the lower (initial) snap position of the snap-on rim 84.

When the filter cartridge 50 is placed on the seat element 10 the lugs 94 rest on the spacer elements 24 and the lugs 94 as well as the ring-shaped extension 96 of the housing wall abut the inner surface of the socket wall 22 so that crude water can only flow into the filter cartridge 50 through the notches 28 and the gaps 26 of the socket 20 as indicated by arrows 80.

In order to place the filter cartridge 50 on the seat element 10 in the operational position as shown in figure 6 it has to be adjusted relative to the seat element 10 to one of three defined rotational positions. As can be seen best in figure 7 the one of said pairing of positioning elements being assigned to the filter cartridge 50, namely lugs 94, is complementary to the one of said pairing of positioning elements being assigned to the seat element 10, namely recesses 32. In particular, the lugs 94 and the recesses 32, in circumferential direction, have the same length l and, in the direction of the axes Zc and Zs, they have the same height h. Further the recesses 32 and the lugs 94, in circumferential direction, have endfaces 34 and 97, respectively, which are inclined at the same angle.

The complementary or inverse geometry causes the lugs 94 fitting precisely into the recesses 32 which ensures defined rotational positions independent of the direction in which the filter cartridge has been twisted during assembly. When the filter cartridge 50 is not in one of the defined rotational orientations the snap-on rim 84 can not be pushed over the sealing seat 14 without twisting the filter cartridge 50. The inclined endfaces 34 cause the filter cartridge 50 to continuously slide down into its deepest position with respect to the seat element 10 when it is manually twisted or it may cause the filter cartridge 50 to rotate automatically when it is pushed axially downwards.

In all embodiments the spacer elements 24, gaps 26, notches 28, lugs 30 and recesses 32 are arranged along the socket with an angular symmetry of 120°. Due to this symmetry of the positioning element, the number of defined rotational orientations of a filter cartridge 50 being inserted into the seat element 10 is 3. Of course, the number is not limited to 3 but can be any of 1 to 4 or more.

## Claims

1. Filtration system comprising a seat element (10) and a filter cartridge (50) placeable on said seat element (10),
the filter cartridge (50) comprising a housing (52), the housing (52) defining a top area (54) and a bottom area (56) and comprising an inlet (92) and an outlet (82), the inlet (92) and the outlet (82) both being arranged in the bottom area (56), the housing (52) further comprising a housing wall (58), an outer extension wall projecting downwards from the bottom area (56) of the housing (52) and providing a supporting edge (94), an inner extension wall (86) projecting downwards from the bottom area (56) of the housing (52) and a snap-on rim (84) being arranged in the bottom area (56) and extending radially inwardly and, initially, axially downwards from the inner extension wall (86), the snap-on rim (84) thereby defining a central axis Zc and encircling the outlet (82),
the seat element (10) having a bottom wall (12) and a sealing seat (14) defining a central axis Zs, the sealing seat (14) protruding upwards from the bottom wall (10),
the snap-on rim (84) being arranged, upon being pushed over the sealing seat (14) while the central axes Zc and Zs are aligned, to flip over from its initially axially downwards extending position into an axially upwards extending position, whereby the snap-on rim (84) in the axially upwards extending position interacts with the sealing seat to create a sealing,
**characterized in that**
the filter cartridge (50) and the seat element (10) each comprise one of a pairing of positioning elements (30) the positioning elements (30) being arranged, upon being brought into contact with each other, to allow the snap-on rim (84) to be pushed over the sealing seat (14) only in a number of n defined rotational orientations, with respect to the central axis Zc, of the filter cartridge (50) relative to the seat element (10).

2. Filtration system according to claim 1,
**characterized in that** the one of said pairing of positioning elements (30) being assigned to the filter cartridge (50) is complementary to the one of said pairing of positioning elements (30) being assigned to the seat element (10).

3. Filtration system according to claim 1 or 2,
**characterized in that** the one of said pairing of positioning elements (30) 95tbeing assigned to the filter cartridge (50) comprises a number of n recesses (96) at the lower end of the outer extension wall.

4. Filtration system according to claim 3,
**characterized in that**
the one of said pairing of positioning elements (30) being assigned to the seat element (10) comprises a number of n lugs (32) protruding upwards from the bottom wall (12).

5. Filtration system according to claim 4,
**characterized in that** the lugs (32) are arranged along a circle around the central axis Zs and the recesses (96) are arranged along a circle around the central axis Zc, both circles having the same radius.

6. Filtration system according to claim 5,
**characterized in that** the lugs (32) and the recesses (96), in circumferential direction, have the same length l.

7. Filtration system according to one of claims 5 or 6,
**characterized in that** the lugs (30) and the recesses (96), in the direction of the axes Zc and Zs, have the same height h.

8. Filtration system according to one of claims 4 to 7, **characterized in that** the lugs (32),in circumferential direction, have inclined endfaces (34).

9. Filtration system according to one of claims 4 to 8, **characterized in that** the recesses (96), in circumferential direction, have inclined endfaces (97).

10. Filter cartridge (50) placeable on a corresponding seat element (10) comprising a sealing seat (14), the filter cartridge (50) comprising a housing (52) defining a top area (54) and a bottom area (56), the housing (52) comprising an inlet (92) and an outlet (82), the inlet (92) and the outlet (82) both being arranged in the bottom area (56), the housing (52) further comprising a housing wall (58), an outer extension wall projecting downwards from the bottom area (56) of the housing (52) and providing a supporting edge (94), an inner extension wall (86) projecting downwards from the bottom area (56) of the housing (52) and a snap-on rim (84) being arranged in the bottom area (56) and extending radially inwardly and, initially, axially downwards from the inner extension wall (86), the snap-on rim (84) thereby defining a central axis Zc and encircling the outlet (82),
the snap-on rim (84) being arranged to flip over from its initially axially downwards extending position into an axially upwards extending position,
**characterized in that**
the filter cartridge (50) comprises a positioning element comprising a number of n recesses (96) at the lower end of the outer extension wall, which positioning element being arranged, upon being brought into contact with a corresponding positioning element (30) of the seat element (10), to allow the snap-on rim (84) to be pushed over the sealing seat (14) only in a number of n defined rotational orientations, with respect to the central axis Zc, of the filter cartridge (50) relative to the seat element (10).

11. Seat element (10) adapted to receive a filter cartridge (50) according to claim 10, the seat element (10) comprising
a bottom wall (12) and a sealing seat (14) defining a central axis Zs, the sealing seat (14) protruding upwards from the bottom wall (12),
**characterized in that**
the seat element (10) comprises a circular socket wall (22) protruding upwards from the bottom wall (12) in axial alignment with the central axis Zs and, thus, coaxially surrounding the sealing seat (14), wherein lugs (32) are arranged along an inner surface of the socket wall (22), the seat element (10) comprises a positioning element (30) comprising a number n of said lugs (32) protruding upwards from the bottom wall, which positioning element (30) being arranged, upon being brought into contact with a corresponding positioning element t95t of the filter cartridge (50), to allow the snap-on rim (84) to be pushed over the sealing seat (14) only in a number of n defined rotational orientations, with respect to the central axis Zs, of the filter cartridge (50) relative to the seat element (10).

## Patentansprüche

1. Filtrationssystem, umfassend ein Sitzelement (10) und eine Filterkartusche (50), die am Sitzelement (10) platzierbar ist,
wobei die Filterkartusche (50) ein Gehäuse (52) umfasst, das Gehäuse (52) einen oberen Bereich (54) und einen unteren Bereich (56) definiert, und einen Einlass (92) und einen Auslass (82) umfasst, wobei der Einlass (92) und der Auslass (82) beide im unteren Bereich (56) angeordnet sind, wobei das Gehäuse (52) weiter eine Gehäusewand (58), eine äußere Erweiterungswand, die abwärts aus dem unteren Bereich (56) des Gehäuses (52) hervorsteht und eine Stützkante (94) bereitstellt, eine innere Erweiterungswand (86), die abwärts aus dem unteren Bereich (56) des Gehäuses (52) hervorsteht, und einen Einrastrand (84) umfasst, der im unteren Bereich (56) angeordnet ist, und sich radial einwärts, ursprünglich, axial abwärts aus der inneren Erweiterungswand (86) erstreckt, wodurch der Einrastrand (84) eine zentrale Achse Zc definiert, und den Auslass (82) umgibt,
wobei das Sitzelement (10) eine untere Wand (12) und einen Dichtsitz (14) aufweist, der eine zentrale Achse Z_{S} definiert, wobei der Dichtsitz (14) aufwärts aus der unteren Wand (10) hervorspringt,
wobei der Einrastrand (84) angeordnet ist, um, wenn er über den Dichtsitz (14) gedrückt wird, während die zentralen Achsen Zc und Zs fluchten, aus seiner anfänglich sich axial abwärts erstreckenden Position in eine sich axial aufwärts erstreckende Position zu kippen, wodurch der Einrastrand (84) in der sich axial aufwärts erstreckenden Position mit dem Dichtsitz zusammenwirkt, um eine Dichtung zu erstellen,
**dadurch gekennzeichnet, dass**
die Filterkartusche (50) und das Sitzelement (10) jeweils eines von einer Paarung von Positionierungselementen (30) umfassen, wobei die Positionierungselemente (30) angeordnet sind, um, wenn sie miteinander in Kontakt gebracht werden, dem Einrastrand (84) zu ermöglichen, nur in einer Anzahl von n definierten Drehausrichtungen in Bezug auf die zentrale Achse Z_{C} der Filterkartusche (50) in Bezug auf das Sitzelement (10) über den Dichtsitz (14) gedrückt zu werden.

2. Filtrationssystem nach Anspruch 1,
**dadurch gekennzeichnet, dass** das eine von der Paarung von Positionierungselementen (30), das der Filterkartusche (50) zugewiesen ist, ergänzend zu dem einen von der Paarung von Positionierungselementen (30) ist, das dem Sitzelement (10) zugewiesen ist.

3. Filtrationssystem nach Anspruch 1 oder 2,
**dadurch gekennzeichnet, dass** das eine von der Paarung von Positionierungselementen (30), das der Filterkartusche (50) zugewiesen ist, eine Anzahl von n Aussparungen (96) am unteren Ende der äußeren Erweiterungswand umfasst.

4. Filtrationssystem nach Anspruch 3,
**dadurch gekennzeichnet, dass**
das eine von der Paarung von Positionierungselementen (30), das dem Sitzelement (10) zugewiesen ist, eine Anzahl von n Ansätzen (32) umfasst, die aufwärts aus der unteren Wand (12) hervorspringen.

5. Filtrationssystem nach Anspruch 4,
**dadurch gekennzeichnet, dass** die Ansätze (32) entlang eines Kreises um die zentrale Achse Z_{S} herum angeordnet sind und die Aussparungen (96) entlang eines Kreises um die zentrale Achse Z_{C} angeordnet sind, wobei beide Kreise denselben Radius aufweisen.

6. Filtrationssystem nach Anspruch 5,
**dadurch gekennzeichnet, dass** die Ansätze (32) und die Aussparungen (96) in Umfangsrichtung dieselbe Länge l aufweisen.

7. Filtrationssystem nach einem von Anspruch 5 oder 6,
**dadurch gekennzeichnet, dass** die Ansätze (30) und die Aussparungen (96) in der Richtung der Achsen Z_{C} und Z_{S} dieselbe Höhe h aufweisen.

8. Filtrationssystem nach einem der Ansprüche 4 bis 7, **dadurch gekennzeichnet, dass** die Ansätze (32) in Umfangsrichtung geneigte Endflächen (34) aufweisen.

9. Filtrationssystem nach einem der Ansprüche 4 bis 8, **dadurch gekennzeichnet, dass** die Aussparungen (96) in Umfangsrichtung geneigte Endflächen (97) aufweisen.

10. Filterkartusche (50), die auf einem entsprechenden Sitzelement (10) platzierbar ist, das einen Dichtsitz (14) umfasst, wobei die Filterkartusche (50) ein Gehäuse (52) umfasst, das einen oberen Bereich (54) und einen unteren Bereich (56) definiert, das Gehäuse (52) einen Einlass (92) und einen Auslass (82) umfasst, wobei der Einlass (92) und der Auslass (82) beide im unteren Bereich (56) angeordnet sind, wobei das Gehäuse (52) weiter eine Gehäusewand (58), eine äußere Erweiterungswand, die abwärts aus dem unteren Bereich (56) des Gehäuses (52) hervorsteht und eine Stützkante (94) bereitstellt, eine innere Erweiterungswand (86), die abwärts aus dem unteren Bereich (56) des Gehäuses (52) hervorsteht, und einen Einrastrand (84) umfasst, der im unteren Bereich (56) angeordnet ist, und sich radial einwärts, ursprünglich, axial abwärts aus der inneren Erweiterungswand (86) erstreckt, wodurch der Einrastrand (84) eine zentrale Achse Z_{C} definiert, und den Auslass (82) umgibt,
wobei der Einrastrand (84) angeordnet ist, um aus seiner anfänglich sich axial abwärts erstreckenden Position in eine sich axial aufwärts erstreckende Position zu kippen,
**dadurch gekennzeichnet, dass**
die Filterkartusche (50) ein Positionierungselement umfasst, das eine Anzahl von n Aussparungen (96) am unteren Ende der äußeren Erweiterungswand umfasst, wobei das Positionierungselement angeordnet ist, um, wenn es mit einem entsprechenden Positionierungselement (30) des Sitzelements (10) in Kontakt gebracht wird, dem Einrastrand (84) zu ermöglichen, nur in einer Anzahl von n definierten Drehausrichtungen in Bezug auf die zentrale Achse Z_{C} der Filterkartusche (50) in Bezug auf das Sitzelement (10) über den Dichtsitz (14) gedrückt zu werden.

11. Sitzelement (10), das ausgeführt ist, um eine Filterkartusche (50) nach Anspruch 10 aufzunehmen, wobei das Sitzelement (10) umfasst
eine untere Wand (12) und einen Dichtsitz (14), der eine zentrale Achse Z_{S}definiert, wobei der Dichtsitz (14) aufwärts aus der unteren Wand (12) hervorspringt,
**dadurch gekennzeichnet, dass**
das Sitzelement (10) eine kreisförmige Schaftwand (22) umfasst, die aufwärts aus der unteren Wand (12) in axialer Fluchtung mit der zentralen Achse Zs hervorspringt, und den Dichtsitz (14) somit koaxial umgibt, wobei Ansätze (32) entlang einer Innenoberfläche der Schaftwand (22) angeordnet sind, das Sitzelement (10) ein Positionierungselement (30) umfasst, das eine Anzahl n der Ansätze (32) umfasst, die aufwärts aus der unteren Wand hervorspringen, wobei das Positionierungselement (30) angeordnet ist, um, wenn es in Kontakt mit einem entsprechenden Positionierungselement der Filterkartusche (50) gebracht wird, dem Einrastrand (84) zu ermöglichen, nur in einer Anzahl von n definierten Drehausrichtungen in Bezug auf die zentrale Achse Z_{S} der Filterkartusche (50) in Bezug auf das Sitzelement (10) über den Dichtsitz (14) gedrückt zu werden.

## Revendications

1. Système de filtration comprenant un élément d'assise (10) et une cartouche filtrante (50) pouvant être placée sur ledit élément d'assise (10),
la cartouche filtrante (50) comprenant un boîtier (52), le boîtier (52) définissant une zone supérieure (54) et une zone inférieure (56) et comprenant une entrée (92) et une sortie (82), l'entrée (92) et la sortie (82) étant toutes les deux agencées dans la zone inférieure (56), le boîtier (52) comprenant en outre une paroi de boîtier (58), une paroi d'extension externe faisant saillie vers le bas à partir de la zone inférieure (56) du boîtier (52) et fournissant un bord de support (94), une paroi d'extension interne (86) faisant saillie vers le bas à partir de la zone inférieure (56) du boîtier (52) et un rebord encliquetable (84) agencé dans la zo
ne inférieure (56) et s'étendant radialement vers l'intérieur et, initialement, axialement vers le bas à partir de la paroi d'extension interne (86), le rebord encliquetable (84) définissant ainsi un axe central Zc et encerclant la sortie (82),
l'élément d'assise (10) présentant une paroi inférieure (12) et une assise d'étanchéité (14) définissant un axe central Zs, l'assise d'étanchéité (14) dépassant vers le haut de la paroi inférieure (10),
le rebord encliquetable (84) étant agencé, après avoir été poussé au-dessus de l'assise d'étanchéité (14) tandis que les axes centraux Zc et Zs sont alignés, pour basculer de sa position d'extension initialement axialement vers le bas vers une position d'extension axialement vers le haut, selon lequel le rebord encliquetable (84) dans la position d'extension axialement vers le haut interagit avec l'assise d'étanchéité pour créer un scellement,
**caractérisé en ce que**
la cartouche filtrante (50) et l'élément d'assise (10) comprennent chacun l'un d'une paire d'éléments de positionnement (30), les éléments de positionnement (30) étant agencés, quand il sont mis en contact l'un avec l'autre, pour permettre au rebord encliquetable (84) d'être poussé au-dessus de l'assise d'étanchéité (14) uniquement dans un nombre n d'orientations de rotation définies, par rapport à l'axe central Zc, de la cartouche filtrante (50) par rapport à l'élément d'assise (10).

2. Système de filtration selon la revendication 1,
**caractérisé en ce que** celui de ladite paire d'éléments de positionnement (30) qui est fixé à la cartouche filtrante (50) est complémentaire de celui de ladite paire d'éléments de positionnement (30) qui est fixé à l'élément d'assise (10).

3. Système de filtration selon la revendication 1 ou 2,
**caractérisé en ce que** celui de ladite paire d'éléments de positionnement (30) qui est fixé à la cartouche filtrante (50) comprend un nombre n d'évidements (96) à l'extrémité inférieure de la paroi d'extension externe.

4. Système de filtration selon la revendication 3,
**caractérisé en ce que**
celui de ladite paire d'éléments de positionnement (30) fixé à l'élément d'assise (10) comprend un nombre n d'ergots (32) dépassant vers le haut de la paroi inférieure (12).

5. Système de filtration selon la revendication 4,
**caractérisé en ce que** les ergots (32) sont agencés le long d'un cercle autour de l'axe central Z_{S} et les évidements (96) sont agencés le long d'un cercle autour de l'axe central Z_{C}, les deux cercles présentant le même rayon.

6. Système de filtration selon la revendication 5,
**caractérisé en ce que** les ergots (32) et les évidements (96), dans une direction circonférentielle, présentent la même longueur l.

7. Système de filtration selon la revendication 5 ou 6,
**caractérisé en ce que** les ergots (30) et les évidements (96), dans la direction des axes Z_{C} et Z_{S}, présentent la même hauteur h.

8. Système de filtration selon l'une des revendications 4 à 7, **caractérisé en ce que** les ergots (32), dans une direction circonférentielle, présentent des faces d'extrémité (34) inclinées.

9. Système de filtration selon l'une des revendications 4 à 8, **caractérisé en ce que** les évidements (96), dans une direction circonférentielle, présentent des faces d'extrémité (97) inclinées.

10. Cartouche filtrante (50) pouvant être placée sur un élément d'assise (10) correspondant comprenant une assise d'étanchéité (14), la cartouche filtrante (50) comprenant un boîtier (52) définissant une zone supérieure (54) et une zone inférieure (56), le boîtier (52) comprenant une entrée (92) et une sortie (82), l'entrée (92) et la sortie (82) étant toutes les deux agencées dans la zone inférieure (56), le boîtier (52) comprenant en outre une paroi de boîtier (58), une paroi d'extension externe faisant saillie vers le bas à partir de la zone inférieure (56) du boîtier (52) et fournissant un bord de support (94), une paroi d'extension interne (86) faisant saillie vers le bas à partir de la zone inférieure (56) du boîtier (52) et un rebord encliquetable (84) agencé dans la zone inférieure (56) et s'étendant radialement vers l'intérieur et, initialement, axialement vers le bas à partir de la paroi d'extension interne (86), le rebord encliquetable (84) définissant ainsi un axe central Z_{C} et encerclant la sortie (82),
le rebord encliquetable (84) étant agencé pour basculer de sa position d'extension initialement axialement vers le bas vers une position d'extension axialement vers le haut,
**caractérisée en ce que**
la cartouche filtrante (50) comprend un élément de positionnement comprenant un nombre n d'évidements (96) à l'extrémité inférieure de la paroi d'extension externe, lequel élément de positionnement étant agencé, quand il est mis en contact avec un élément de positionnement (30) correspondant de l'élément d'assise (10), pour permettre au rebord encliquetable (84) d'être poussé au-dessus de l'assise d'étanchéité (14) uniquement dans un nombre n d'orientations de rotation définies, par rapport à l'axe central Z_{C}, de la cartouche filtrante (50) par rapport à l'élément d'assise (10).

11. Élément d'assise (10) adapté pour recevoir une cartouche filtrante (50) selon la revendication 10, l'élément d'assise (10) comprenant
une paroi inférieure (12) et une assise d'étanchéité (14) définissant un axe central Z_{S}, l'assise d'étanchéité (14) dépassant vers le haut de la paroi inférieure (12),
**caractérisé en ce que**
l'élément d'assise (10) comprend une paroi de douille (22) circulaire dépassant vers le haut de la paroi inférieure (12) en alignement axial avec l'axe central Zs et entourant ainsi de manière coaxiale l'assise d'étanchéité (14), dans lequel des ergots (32) sont agencés le long d'une surface interne de la paroi de douille (22), l'élément d'assise (10) comprend un élément de positionnement (30) comprenant un nombre n desdits ergots (32) dépassant vers le haut de la paroi inférieure, lequel élément de positionnement (30) étant agencé, quand il est mis en contact avec un élément de positionnement correspondant de la cartouche filtrante (50), pour permettre au rebord encliquetable (84) d'être poussé au-dessus de l'assise d'étanchéité (14) uniquement dans un nombre n d'orientations de rotation définies, par rapport à l'axe central Zs, de la cartouche filtrante (50) par rapport à l'élément d'assise (10).
